# EUROPEAN PATENT SPECIFICATION

(11) **EP 3 796 175 B1**
(45) Date of publication and mention of the grant of the patent: **10.01.2024**
(21) Application number: 20194260.4
(22) Date of filing: 03.09.2020
(51) Int. Cl.: G06F 11/30, G06F 11/36, G06F 11/34

(54) **NON INTRUSIVE MULTICORE DEBUGGING BASED ON PC COUNTER**
NICHT AUFDRINGLICHES MULTICORE-DEBUGGING BASIEREND AUF DEM PC-ZÄHLER
DÉBOGAGE NON INTRUSIF DE PROCESSEUR MULTI-COEURS BASÉ SUR UN COMPTEUR ORDINAL

(30) Priority: 19.09.2019 JP 2019170809
(43) Date of publication of application: 24.03.2021
(73) Proprietor: CANON KABUSHIKI KAISHA, OHTA-KU Tokyo 146-8501 (JP)
(72) Inventor: MATSUI, Tsukasa, Ohta-ku,, Tokyo 146-8501 (JP)
(74) Representative: TBK

(56) References cited:
- US-A1- 2015 127 992
- US-A1- 2016 274 992
- US-B1- 7 793 261
- ADRIEN VERGÉ ET AL: "Hardware-assisted software event tracing : Hardware-assisted software event tracing", CONCURRENCY AND COMPUTATION: PRACTICE AND EXPERIENCE, vol. 29, no. 10, 25 May 2017 (2017-05-25), page e4069, XP055633683, GB ISSN: 1532-0626, DOI: 10.1002/cpe.4069
- JIFF KUO ALAN P SU ET AL: "Multi-core software/hardware co-debug platform with ARM CoreSight(TM), on-chip test architecture and AXI/AHB bus monitor", VLSI DESIGN, AUTOMATION AND TEST (VLSI-DAT), 2011 INTERNATIONAL SYMPOSIUM ON, IEEE, 25 April 2011 (2011-04-25), pages 1-6, XP031880525, DOI: 10.1109/VDAT.2011.5783594 ISBN: 978-1-4244-8500-0

## Description

### Field of the Invention

The present invention relates to a multiprocessor device.

### Description of the Related Art

A large amount of time is spent on debugging in the development of a program, and debugging needs to be performed efficiently. Also, when debugging an operation of a program that performs periodic control, information of the transition and the data of the program need to be referred without stopping the operation of the program. To perform such debugging, a method that uses debugging-dedicated hardware, a method that uses a processor for debugging, and the like are known.

As a debugging method of a multiprocessor formed from a plurality of processors, a method disclosed by Japanese Patent Laid-Open No. 2007-004364 is known. In Japanese Patent Laid-Open No. 2007-004364, one or more processors of the plurality of processors are used for debugging to debug another debugging-target processor. In this method, a watchdog timer or the like is used to detect an abnormality in the debugging-target processor.

However, the method using the debugging-dedicated hardware described above is problematic in that the addition of the debugging-dedicated hardware will cause the circuit scale to increase just for the sake of this hardware which is to be used only at the time of debugging.

Also, a debugging method of a multiprocessor as that disclosed by Japanese Patent Laid-Open No. 2007-004364 is problematic in that, in some cases, the data of the debugging-target processor cannot be immediately referred when data is to be referred periodically or it will not be possible to refer to desired reference data because of additional processing operations due to condition branching and the like.
The document US 2016/274992 A1 discloses a method and a multi-core processing system for tracing a program execution state, wherein the method includes following steps. A processor is provided, wherein the processor includes a first core and a second core. An operating system is executed by the first core, and a program is executed by the second core. During a period where the program is executed by the second core, an execution state of the second core is traced by the first core using a tracing module, so as to obtain raw execution data generated by the program executed by the second core. The raw execution data associated with the program is stored.
Further related art is known from the article entitled "Hardware-assisted software event tracing : Hardware-assisted software event tracing" by Adrien Vergé at al., CONCURRENCY AND COMPUTATION: PRACTICE AND EXPERIENCE, GB, (20170525), vol. 29, no. 10, doi:10.1002/cpe.4069, ISSN 1532-0626, page e4069, XP055633683, the document US 2015/127992 A1, the article entitled "Multi-core software/hardware co-debug platform with ARM CoreSight(TM), on-chip test architecture and AXI/AHB bus monitor" by Alan P. Su at al., 2011 INTERNATIONAL SYMPOSIUM ON VLSI DESIGN, AUTOMATION AND TEST (VLSI-DAT), IEEE, (20110425), doi: 10. 1 109/VDAT.2011.5783594, ISBN 978-1-4244-8500-0, pages 1 - 6, XP031880525, and the document US 7 793 261 B1.

### SUMMARY OF THE INVENTION

The present invention in its first aspect provides a multiprocessor device as specified in claims 1 to 4.

The present invention implements a more efficient debugging operation on a multiprocessor device.

Further features of the present invention will become apparent from the following description of exemplary embodiments (with reference to the attached drawings).

### BRIEF DESCRIPTION OF THE DRAWINGS

The accompanying drawings, which are incorporated in and constitute a part of the specification, illustrate embodiments of the invention, and together with the description, serve to explain the principles of the invention.
Fig. 1 is a block diagram showing the functions and the arrangement of a first processor included in a multiprocessor device according to an embodiment;
Fig. 2 is a block diagram showing the functions and the arrangement, which are used in a debugging mode, of the first processor and a second processor included in a multiprocessor device according to the embodiment;
Figs. 3A and 3B are views showing an example of the positional relationship between a debugging-target program portion and a debugging program portion;
Figs. 4A and 4B are views showing another example of the positional relationship between the debugging-target program portion and the debugging program portion;
Figs. 5A and 5B are views showing yet another example of the positional relationship between the debugging-target program portion and the debugging program portion;
Fig. 6 is an explanatory view showing the sequence in which debugging of a program is executed by a debugging method according to the embodiment; and
Fig. 7 is a timing chart showing, in time series, processing operations of the first processor as the debugging-target and the second processor as the debugging processor.

### DESCRIPTION OF THE EMBODIMENTS

Hereinafter, an embodiment will be described in detail with reference to the attached drawings. Note, the following embodiment does not define or limit the scope of the present invention, as the scope thereof is defined by the claims. Multiple features are described in the embodiment, but limitation is not made to a realization that requires all such features, and multiple such features may be combined as appropriate. Furthermore, in the attached drawings, the same reference numerals are given to the same or similar configurations, and redundant description thereof is omitted.

When a program that performs periodic control such as motor control or the like is to be debugged, data needs to be referred without stopping the operation of the program. In an embodiment, in order to perform debugging in a multiprocessor without a debugging-dedicated module, a debugging processor will fetch an instruction by referring to a program counter of a debugging-target processor. This will allow the debugging processor to perform debugging in synchronization with the debugging-target processor without stopping the operation of the program.

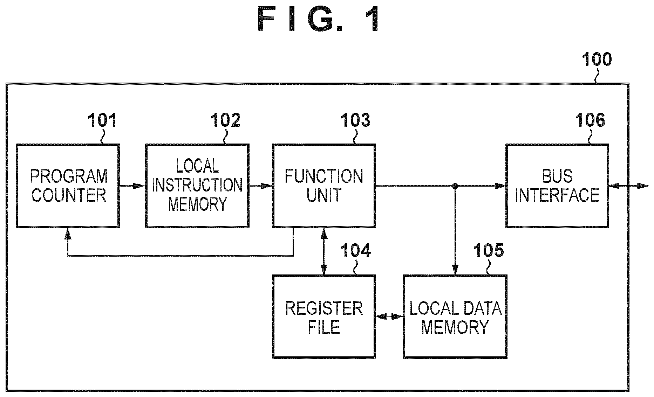

Fig. 1 is a block diagram showing the functions and the arrangement of a first processor 100 included in a multiprocessor device according to the embodiment. The multiprocessor device further includes at least another processor that has an arrangement similar to the first processor 100 shown in Fig. 1. Alternatively, the multiprocessor device may include a plurality of processors that have different arrangements from each other to an extent that a debugging function according to this embodiment can be implemented. This embodiment relates to a debugging means of a multiprocessor device that has a multiprocessor arrangement including a plurality of processors, and relates particularly to a debugging means used when some of the processors, among the plurality of processors, are to be used for debugging.

The first processor 100 includes a program counter 101, a local instruction memory 102, a function unit 103, a register file 104, a local data memory 105, and a bus interface 106.

The program counter 101 is also referred to as an instruction pointer (IP) and a sequential control counter (SCC), and holds an address which is to be used to refer to the local instruction memory 102. Each processor included in the multiprocessor device includes its own unique program counter.

The local instruction memory 102 holds an instruction that forms a program to be executed in the first processor 100. The first processor 100 is formed to be able to fetch an instruction from the local instruction memory 102 and transfer the fetched instruction to the function unit 103 by using a value (address) included in its own program counter 101 at the time of a normal operation (that is, when the debugging mode is not set).

The function unit 103 receives an instruction obtained as a result of referring to the local instruction memory 102 based on the value (address) from the program counter 101, and processes the instruction. The function unit 103 decodes the instruction that has been referred, and executes various kinds of processing in accordance with the decoded result. The processing operations performed by the function unit 103 include computation using the data of the register file 104 and/or the data of the local data memory 105, data exchange with the register file 104, and data exchange with the local data memory 105.

The register file 104 is formed from a plurality of registers, and holds settings, parameters, and the like for the computation and processing operations to be performed by the function unit 103. The function unit 103 can read out from and write into an arbitrary register included in the register file 104.

The local data memory 105 holds the data for each program to be executed by the first processor 100.

The bus interface 106 is an interface used by the first processor 100 to access the outside, and is connected to peripheral modules such as a timer, PWM (Pulse Width Modulation), and the like, a shared memory, an external bus interface, and the like.

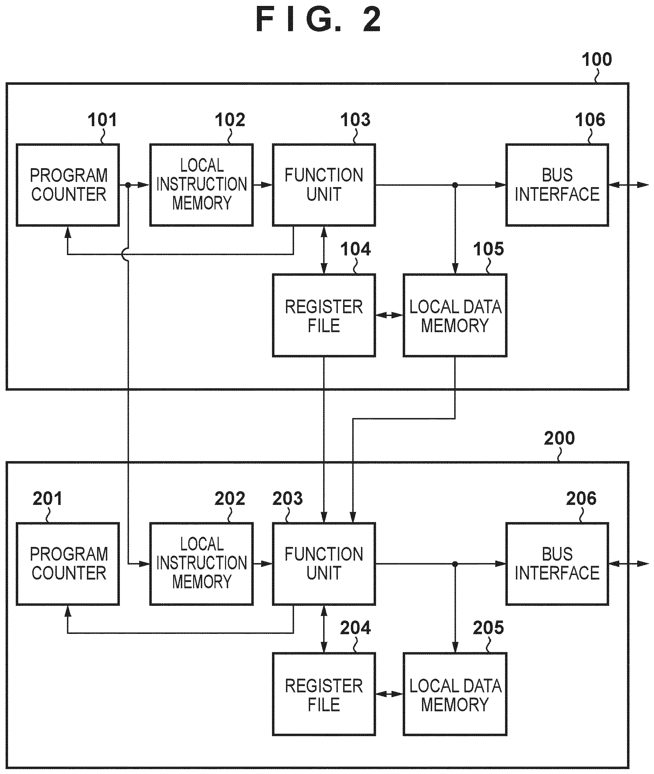

Fig. 2 is a block diagram showing the functions and the arrangements, which are used in a debugging mode, of the first processor 100 and a second processor 200 included in the multiprocessor device according to this embodiment. In the example shown in Fig. 2, the first processor 100 is the processor (that is, a debugging-target) to be debugged, and the second processor 200 is the processor (that is, a debugging processor) which is to debug the debugging-target processor. The second processor 200 has an arrangement similar to the first processor 100. A program counter 201, a local instruction memory 202, a function unit 203, a register file 204, a local data memory 205, and a bus interface 206 included in the second processor 200 correspond to the program counter 101, the local instruction memory 102, the function unit 103, the register file 104, the local data memory 105, and the bus interface 106, respectively, of the first processor 100.

The multiprocessor device is arranged so that the second processor 200 can refer to a value held in the program counter 101 of the first processor 100, and so that the second processor 200 can refer to the data of the register file 104 and the data of the local data memory 105 of the first processor 100. Such an arrangement is implemented by, for example, appropriately connecting the first processor 100 and the second processor 200 by wiring in the multiprocessor device.

As described above, at the time of a normal operation, the first processor 100 and the second processor 200 will use their own program counters, that is, the program counter 101 and the program counter 201, respectively, to fetch an instruction.

In the debugging mode, when debugging of the first processor 100 as the debugging target is to be performed by the second processor 200 as the debugging processor, the second processor 200 will be arranged to perform the following processing operations.

(1) Refer to the value held in the program counter 101 of the first processor 100.

(2) Use the value obtained by referring to the program counter 101, fetch an instruction from the local instruction memory 202 of the second processor 200, and transfer the fetched instruction to the function unit 203 of the second processor 200.

In a case in which the instruction fetched by using the value obtained by referring to the program counter 101 of the first processor 100 requires the data of the first processor 100 to be used as a reference, the function unit 203 of the second processor 200 refers to the data held by the first processor 100. For example, in a case in which the fetched instruction requires the obtainment of data of the register file 104 of the first processor 100, the function unit 203 of the second processor 200 will refer to the register file 104 of the first processor 100. Alternatively, in a case in which the fetched instruction requires the obtainment of the data of the local data memory 105 of the first processor 100, the function unit 203 of the second processor 200 will refer to the local data memory 105 of the first processor 100.

The second processor 200 stores the data of the first processor 100 obtained as a result of the reference operation and the program transition information of the first processor 100 in a dump destination via the bus interface 206.

A debugging program to be executed by the second processor 200 is generated by considering, based on a debugging-target program to be executed in the first processor 100, the position (that is, the address) of an instruction handling the desired execution time data to be referred. As a result, the local instruction memory 202 of the second processor 200 will hold the debugging program for debugging the debugging-target program in a position associated with the position in which the debugging-target program to be executed in the first processor 100 is stored.

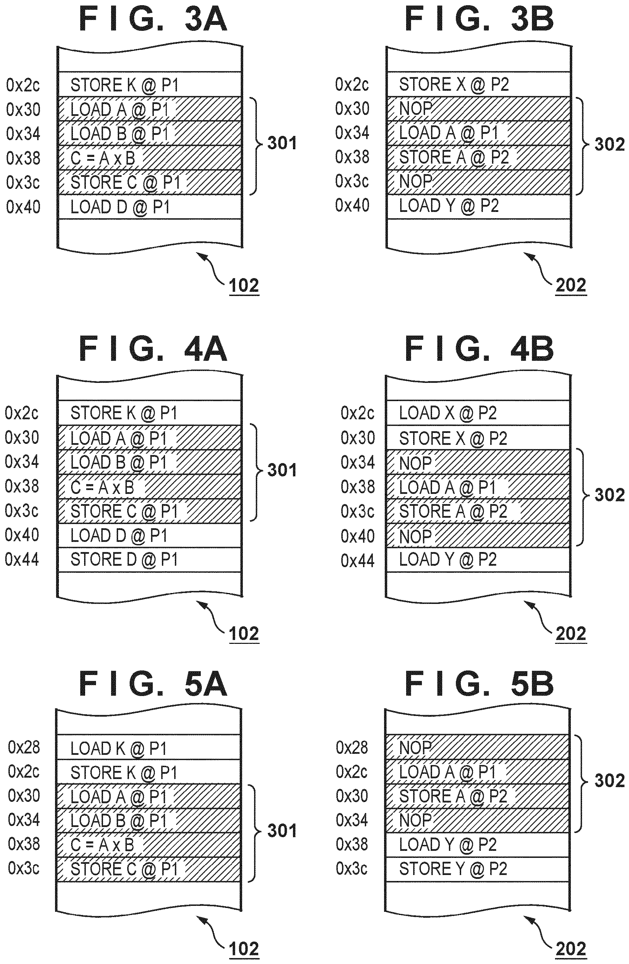

Figs. 3A and 3B are views showing an example of the positional relationship between a debugging-target program portion 301 and a debugging program portion 302. The debugging-target program portion 301 is formed by four instructions, that is, "LOAD A @ P1" (load data A in the first processor 100) which is held at an address "0x30", "LOAD B @ P1" (load data B in the first processor 100) which is held at an address "0x34", "C = A × B" (set C as a result of multiplying A and B) which is held at an address "0x38", and "STORE C @ P1" (store data C in the first processor 100) which is held at an address "0x3c" in the local instruction memory 102 of the first processor 100.

The debugging program portion 302 is formed by four instructions, that is, "NOP" (do nothing) which is held at an address "0x30", "LOAD A @ P1" (load the data A that has been loaded in the first processor 100) which is held at an address "0x34", "STORE A @ P2" (store the data A in the second processor 200) which is held at an address "0x38", and "NOP" which is held at an address "0x3c" in the local instruction memory 202 of the second processor 200.

In the example shown in Figs. 3A and 3B, the start address of the debugging program portion 302 in the local instruction memory 202 matches the start address of the debugging-target program portion 301 in the local instruction memory 102. In this case, it can be arranged so that the second processor 200 will refer to the value held in the program counter 101 of the first processor 100, fetch, from the local instruction memory 202 of the second processor 200, an instruction held at the address indicated by the value of the program counter 101 obtained in the reference operation, and transfer the fetched instruction to the function unit 203.

Figs. 4A and 4B are views showing another example of the positional relationship of the debugging-target program portion 301 and the debugging program portion 302. The addresses of the debugging-target program portion 301 held in the local instruction memory 102 of the first processor 100 are the same as those of the example shown in Figs. 3A and 3B. However, the addresses storing the debugging program portion 302 in the local instruction memory 202 of the second processor 200 do not match the addresses storing the corresponding debugging-target program portion 301. In the example shown by Figs. 4A and 4B, the debugging program portion 302 is stored at addresses each obtained by adding "4" to an address storing the debugging-target program portion 301.

In this case, it can be arranged so that the second processor 200 will refer to the value held in the program counter 101 of the first processor 100, fetch, from the local instruction memory 202 of the second processor 200, an instruction held in an address obtained by adding "4" to the address indicated by the value referred from the program counter 101, and transfer the fetched instruction to the function unit 203.

Figs. 5A and 5B are views showing yet another example of the positional relationship between the debugging-target program portion 301 and the debugging program portion 302. In the example shown in Figs. 5A and 5B, the debugging program portion 302 is stored at addresses each obtained by subtracting 8 from an address storing the debugging-target program portion 301. In this case, it can be arranged so that the second processor 200 will refer to a value held in the program counter 101 of the first processor 100, fetch, from the local instruction memory 202 of the second processor 200, an instruction held at an address obtained by subtracting "8" from the address indicated by the value referred in the program counter 101, and transfer the fetched instruction to the function unit 203.

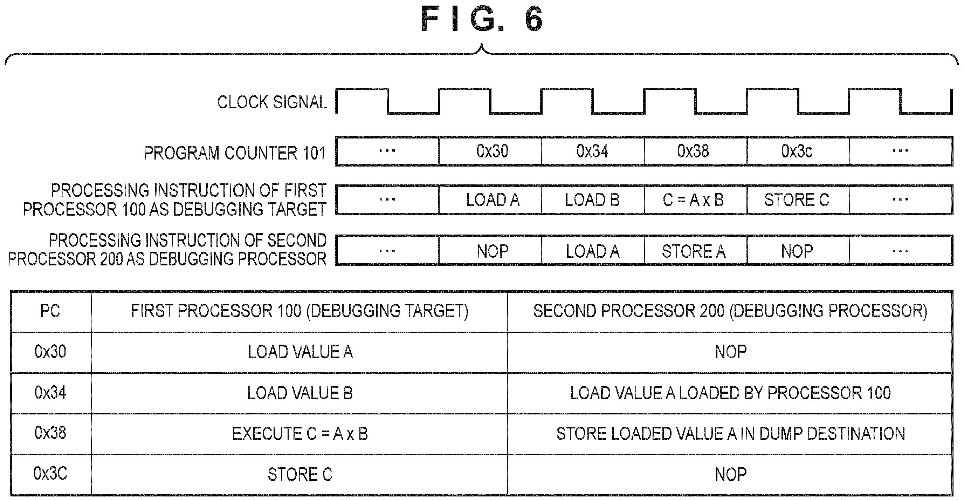

Fig. 6 is an explanatory view showing the sequence in which debugging of a program is executed by a debugging method according to the embodiment. The first processor 100 as the debugging target loads data and performs a multiplication operation using the data. To confirm the data loaded by the first processor 100, the second processor 200 as the debugging processor refers to the data and dumps the data.

In a waveform graph at the upper portion of the Fig. 6, the first row shows a clock signal that input in common to the first processor 100 and the second processor 200. The second row shows the values held in the program counter 101 of the first processor 100. The second processor 200 will also use these values to fetch the corresponding instructions when the debugging mode is set. The third row shows each instruction to be executed by the first processor 100 as the debugging target when a corresponding value of the program counter 101 shown in the second row has been fetched. In the example shown in Fig. 6, the first processor 100 loads data when the value of the program counter 101 is "0x30" and when the value is "0x34", performs a multiplication operation by using the loaded data when the value is "0x38", and stores the result of the multiplication when the value is "0x3c". The fourth row shows each instruction to be executed by the second processor 200 as the debugging processor when a corresponding value of the program counter 101 shown in the second row has been fetched. In the example shown in Fig. 6, the second processor 200 executes an NOP instruction when the value in the program counter 101 is "0x30" and when the value is "0x3c", loads, when the value is "0x34", the data loaded by the first processor 100 when the value was "0x30", and performs processing to store the loaded data in a dump destination for debugging when the value is "0x38".

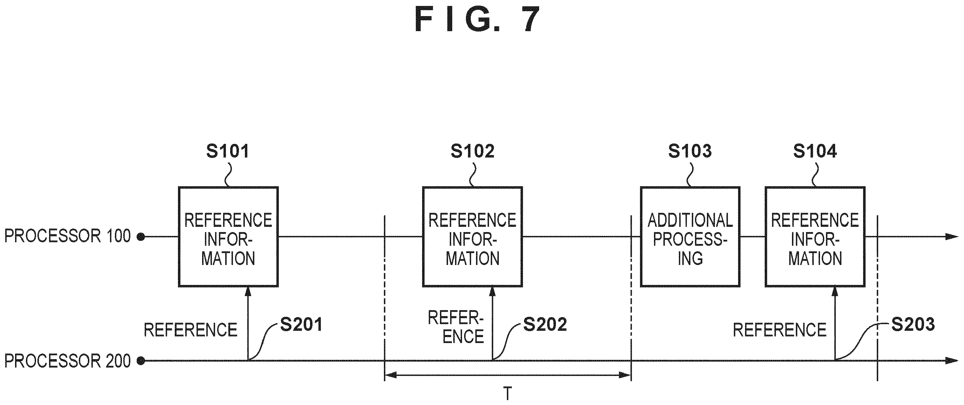

Fig. 7 is a timing chart showing, in time series, the processing operations of the first processor 100 as the debugging target and the second processor 200 as the debugging processor. Fig. 7 shows a state in which a data reference operation by the second processor 200 shown in Fig. 6 is being executed repeatedly (that is, periodically) at a period T. In the example shown in Fig. 7, the first processor 100 executes a periodic control program to perform periodic control. Thus, instructions for forming a periodic control program are stored in the local instruction memory 102. The periodic control program includes debugging-target portions and portions which are not set as the debugging target. In the example shown in Fig. 7, program portions which are denoted by S101, S102, and S 104 and where the first processor 100 is to be set in a reference-target information possessing state are the debugging-target portions, and portions, including the additional processing of S 103, other than these are portions which are not set as the debugging target.

In S101, the first processor 100 changes to the reference-target information possessing state. In S101, the readout, the computation, and the like of the reference target information are performed. Processing corresponding to S101 is called reference information possession processing. Since the second processor 200 will operate by using the program counter 101 of the first processor 100, the second processor 200 will refer, in S201, to the reference target information while this information is possessed by the first processor 100. The reference information possession processing in S 102 and the reference processing of S202 are similar to the processing operations of S101 and S202, respectively. In S103, additional processing operations such as branch processing, additional latency in memory access, and the like are generated, and additional time is generated in the first processor 100. However, since the second processor 200 is formed to start the debugging operation in synchronization with the reference information possession processing of the first processor 100, the second processor 200 will standby without referring to the data while the additional processing operations are being performed in S103. Subsequently, after the first processor 100 has possessed the reference target information in S104 in a similar manner to S101 and S102, the second processor 200 will refer to the data of first processor 100 in S203.

In the multiprocessor device according to this embodiment, the second processor 200 as the debugging processor can fetch an instruction by using a value held in the program counter 101 of the first processor 100 as the debugging target. This allows data to be referred in synchronization with the behavior of the debugging target.

In addition, in the multiprocessor device according to this embodiment, desired data can be referred in synchronization with the behavior of the debugging target, without the addition of debugging-dedicated hardware, in an arrangement in which a debugging processor is to be set from a plurality of processors.

In general, when a specific processor is to be used for debugging the operation of another processor in a multiprocessor arrangement, there is a problem in that it is difficult to execute a data reference operation during a computation operation because the detailed progression state of the operation of the debugging-target processor cannot be grasped. In the multiprocessor device according to this embodiment, debugging can be executed in a form which is synchronized with the progression state of the operation of a debugging-target processor by executing debugging by generating a debugging program corresponding to the program counter of a debugging-target program, causing the debugging processor to refer to the program counter of the debugging-target processor, and fetching an instruction by using the value referred from the program counter of the debugging-target processor. As a result, it becomes easier to perform a data reference operation during a computation operation, thereby allowing debugging to be performed more efficiently and effectively.

In addition, in the multiprocessor device according to this embodiment, the stored addresses of the debugging-target program and the stored addresses of the corresponding debugging program have a predetermined relationship. Hence, when the debugging-target program is to be debugged, a search for the stored addresses of the corresponding debugging program need not be performed separately, and the stored addresses of the debugging program can be specified from the stored addresses of the debugging-target program itself.

The operations and the arrangement of the multiprocessor device according to this embodiment have been described above. This embodiment is merely an example, and it should be obvious to a person skilled in the art that various modifications can be made to the combination of the components and the processes.

While the present invention has been described with reference to exemplary embodiment, it is to be understood that the present invention is not limited to the disclosed exemplary embodiment but is defined by the claims.

## Claims

1. A multiprocessor device that includes a first processor (100) and a second processor (200), wherein
the first processor (100) includes a first program counter (101) and a first memory (102) in which a debugging-target program, which is to be executed by the first processor, is stored, and the second processor (200) includes a second program counter (201) and a second memory (202) in which a debugging program for debugging the debugging-target program, which is to be executed by the second processor, is stored, wherein the second memory (202) holds the debugging program in a position associated with a position in which the debugging-target program is stored in the first memory,
**characterized in that**
the multiprocessor device is configured to cause, when debugging of the first processor is to be performed by using the second processor, the second processor (200) to refer to a value of the first program counter (101) of the first processor, to fetch an instruction of the debugging program from the second memory (202) of the second processor by using the value referred from the first program counter (101) of the first processor, and to transfer the fetched instruction to a function unit (203) of the second processor for decoding and execution.

2. The device according to claim 1, wherein a function unit (203) of the second processor is configured to refer to data held in the first processor based on the fetched instruction by using the value referred from the first program counter (101) of the first processor.

3. The device according to claim 1 or 2, wherein, at a time of a normal operation, the second processor (200) is configured to fetch an instruction from the second memory (202) of the second processor by using a value of the second program counter (201) of the second processor.

4. The device according to any one of claims 1 to 3, wherein the first processor (100) is configured to execute a program for performing periodic control, and the program includes a portion which is set as a debugging target and a portion which is not set as the debugging target.

## Patentansprüche

1. Eine Multiprozessorvorrichtung, die einen ersten Prozessor (100) und einen zweiten Prozessor (200) aufweist, wobei
der erste Prozessor (100) einen ersten Programmzähler (101) und einen ersten Speicher (102) aufweist, in dem ein von dem ersten Prozessor auszuführendes Debugging-Zielprogramm gespeichert ist, und der zweite Prozessor (200) einen zweiten Programmzähler (201) und einen zweiten Speicher (202) aufweist, in dem ein Debugging-Programm zum Debuggen des Debugging-Zielprogramms, das von dem zweiten Prozessor auszuführen ist, gespeichert ist, wobei der zweite Speicher (202) das Debuggingprogramm in einer Position hält, die einer Position zugeordnet ist, in der das Debugging-Zielprogramm in dem ersten Speicher gespeichert ist, **dadurch gekennzeichnet, dass**
die Multiprozessorvorrichtung eingerichtet ist, um, wenn Debuggen des ersten Prozessors unter Verwendung des zweiten Prozessors durchgeführt werden soll, den zweiten Prozessor (200) zu veranlassen, auf einen Wert des ersten Programmzählers (101) des ersten Prozessors Bezug zu nehmen, um eine Anweisung des Debuggingprogramms aus dem zweiten Speicher (202) des zweiten Prozessors unter Verwendung des vom ersten Programmzähler (101) des ersten Prozessors bezogenen Wertes abzurufen und die abgerufene Anweisung an eine Funktionseinheit (203) des zweiten Prozessors zur Decodierung und Ausführung zu übertragen.

2. Die Vorrichtung nach Anspruch 1, wobei eine Funktionseinheit (203) des zweiten Prozessors eingerichtet ist, um auf der Grundlage der abgerufenen Anweisung unter Verwendung des vom ersten Programmzähler (101) des ersten Prozessors bezogenen Werts auf im ersten Prozessor gehaltene Daten zu verweisen.

3. Die Vorrichtung nach Anspruch 1 oder 2, wobei der zweite Prozessor (200) eingerichtet ist, um zu einem Zeitpunkt eines normalen Betriebs durch verwenden eines Werts des zweiten Programmzählers (201) des zweiten Prozessors eine Anweisung aus dem zweiten Speicher (202) des zweiten Prozessors abzurufen.

4. Die Vorrichtung nach einem der Ansprüche 1 bis 3, wobei der erste Prozessor (100) eingerichtet ist, um ein Programm zur Durchführung einer periodischen Steuerung auszuführen, und das Programm einen Teil aufweist, der als ein Debuggingziel eingestellt ist, und einen Teil, der nicht als das Debuggingziel festgelegt ist.

## Revendications

1. Dispositif multiprocesseur qui comprend un premier processeur (100) et un second processeur (200), dans lequel
le premier processeur (100) comprend un premier compteur de programme (101) et une première mémoire (102) dans laquelle est mémorisé un programme de cible de débogage qui doit être exécuté par le premier processeur, et le second processeur (200) comprend un second compteur de programme (201) et une seconde mémoire (202) dans laquelle est mémorisé un programme de débogage permettant de déboguer le programme de cible de débogage, qui doit être exécuté par le second processeur, dans lequel la seconde mémoire (202) maintient le programme de débogage à une position associée à une position au niveau de laquelle le programme de cible de débogage est mémorisé dans la première mémoire,
**caractérisé en ce que**
le dispositif multiprocesseur est configuré pour amener, lorsqu'un débogage du premier processeur doit être mis en oeuvre au moyen du second processeur, le second processeur (200) à se référer à une valeur du premier compteur de programme (101) du premier processeur, à extraire une instruction du programme de débogage de la seconde mémoire (202) du second processeur au moyen de la valeur de référence du premier compteur de programme (101) du premier processeur, et à transférer l'instruction extraite à une unité de fonction (203) du second processeur à des fins de décodage et d'exécution.

2. Dispositif selon la revendication 1, dans lequel une unité de fonction (203) du second processeur est configurée pour se référer à des données maintenues dans le premier processeur sur la base de l'instruction extraite au moyen de la valeur de référence du premier compteur de programme (101) du premier processeur.

3. Dispositif selon la revendication 1 ou 2, dans lequel, à un instant de fonctionnement normal, le second processeur (200) est configuré pour extraire une instruction de la seconde mémoire (202) du second processeur au moyen d'une valeur du second compteur de programme (201) du second processeur.

4. Dispositif selon l'une quelconque des revendications 1 à 3, dans lequel le premier processeur (100) est configuré pour exécuter un programme pour mettre en oeuvre une commande périodique, et le programme comprend une partie qui est définie en tant que cible de débogage et une partie qui n'est pas définie en tant que la cible de débogage.
